# EUROPÄISCHE PATENTSCHRIFT

(11) **EP 0 599 905 B1**
(45) Veröffentlichungstag und Bekanntmachung des Hinweises auf die Patenterteilung: **03.11.1999**
(21) Anmeldenummer: 92917082.7
(22) Anmeldetag: 04.08.1992
(51) Int. Cl.: C08J 11/08, B03B 9/06, B03B 5/28

(54) **VERFAHREN ZUM BEHANDELN VON MITEINANDER MITTELS HAFTVERMITTLER VERBUNDENEN MATERIALIEN**
PROCESS FOR TREATING MATERIALS ADHESIVELY SECURED TOGETHER BY AN ADHESIVE AGENT
PROCEDE DE TRAITEMENT DE MATERIAUX LIES MUTUELLEMENT AU MOYEN D'UN AGENT ADHESIF

(30) Priorität: 23.08.1991 DE 4127705
(43) Veröffentlichungstag der Anmeldung: 08.06.1994
(73) Patentinhaber: Nowak und Schrödel GmbH, 14467 Potsdam (DE)
(72) Erfinder: GARTZEN, Johannes, D-5166 Kreuzau-Untermaubach (DE); HEIL, Günter, D-5190 Stolberg (DE); MANG, Thomas, D-8122 Penzberg (DE)
(74) Vertreter: Ziebig, Marlene, Dr. Dipl.-Chem.
(86) Internationale Anmeldenummer: EP9201767
(87) Internationale Veröffentlichungsnummer: WO9304116

(56) Entgegenhaltungen:
- US-A- 4 543 364
- CHEMICAL ABSTRACTS, vol. 104, no. 14, 7. April 1986, Columbus, Ohio, US; abstract no. 111021t, Seite 58 ;
- RESEARCH DISCLOSURE Bd. 245, September 1984, HAVANT GB Seite 430 ANONYMOUS '24520 RECLAMATION OF POLYESTER FROM POLYVINYLIDENE CHLORIDE - POLYESTER COMPOSITE'
- RESEARCH DISCLOSURE Bd. 212, Dezember 1981, HAVANT GB Seiten 449 - 450 ANONYMOUS '21231 SEPARATION OF POLYVINYLIDENE CHLORIDE COPOLYMER COATINGS FROM ORIENTED POLYESTER SUBSTRATES'

## Beschreibung

Die Erfindung betrifft ein Verfahren zum Behandeln von mindestens zwei miteinander mittels Haftvermittler verbundenen Materialien. Solche Materialien können z. B. Kabelummantelungen oder Teile von Kabelummantelungen sein, bei denen im wesentlichen Polyethylen und Aluminium mittels eines Haftvermittlers miteinander verbunden sind. Es kann sich hier aber auch um z. B. Aluminiumblisterverpackungen oder Zahnpastatuben oder ähnliche Dinge handeln, bei denen, wie z. B. bei Aluminiumblister, im wesentlichen Aluminium und Kunststoffe wie Polypropylen oder PVC mittels eines Haftvermittlers miteinander verbunden sind. Die Behandlung dieser Materialien, wenn sie ihren Zweck erfüllt haben, besteht heute darin, sie zu deponieren oder zu verbrennen. Werden sie deponiert, entsteht ein erheblicher Deponiebedarf, wobei gleichzeitig hingenommen werden muß, daß solche Materialien in absehbaren Zeiträumen nicht zerfallen, sondern erhalten bleiben. Werden sie aber verbrannt, muß ein erheblicher Aufwand betrieben werden, um die hierbei entstehenden schädlichen Abgase unschädlich zu machen. Soweit die Kunststoffanteile PVC sind, müssen in der Verbrennungsanlage zusätzliche Maßnahmen getroffen werden, um die Salzsäure bildenden Abgasströme zu neutralisieren oder in irgendeiner sonstigen Weise unschädlich zu machen.

Verfahren zum Trennen von Verbundmaterialien sind aus dem Stand der Technik bereits bekannt. Innerhalb der Schrift US-A 4, 543, 346 wird ein solches Verfahren unter Anwendung von chloriertem organischen Lösungsmittel, z. B. Methylenchlorid, Chloroform oder Tetrachlorkohlenstoff, und anschließender azeotroper Destillation beschrieben. Innerhalb des Research Disclosure, Bd. 245, S. 430, disclosed anonymously 24520, wird im Verfahren eine Mischung von Methanol und Methylanchlorid zur Trennung von Polyester- und/oder Polyvinylmaterial verwendet. Die JP-A-60 212 434 [Chemical Abstract, Vol. 104, No. 14, 111021 t] beschreibt ebenfalls organische Lösungsmittel oder Gemische, die jedoch frei von Wasser sind.

Als Nachteile dieser bisher bekannten Mischungen oder reinen Lösungsmittel sind aufzuführen, daß sich relativ viel Kunststoff und Farbe im Lösungsmittel löst und somit die Lösung häufiger als gewünscht aufgearbeitet oder ersetzt werden muß.

Ausgehend von dieser Situation liegt der Erfindung die Aufgabe zugrunde, ein Verfahren der eingangs beschriebenen Art vorzuschlagen, mit welchem der Deponiebedarf mindestens verringert und die Probleme der Verbrennung vermieden und das verwendete Lösungsmittelgemisch sich zur Behandlung größter Mengen Verbundmaterials eignet ohne gereinigt oder ausgetauscht zu werden.

Diese Aufgabe ist bei einem Verfahren der eingangs beschriebenen Art dadurch gelöst, daß der Haftvermittler mittels einer die Materialien selbst nicht lösenden Aceton-Wasser-Mischung gelöst wird und hierdurch die miteinander verbundenen Materialien voneinander getrennt werden. Wird der Haftvermittler gelöst, so liegen die bisher miteinander verbundenen Elemente der Materialien einzeln vor und können bequem separiert und recycliert werden. Können sie aber einfach recycliert werden, so ist eine Deponie nicht mehr erforderlich und auch eine Verbrennung nicht. Es wird somit Deponierraum eingespart, und die Probleme bei der Verbrennung werden vermieden.

In einer Ausgestaltung des Verfahrens wird vorgeschlagen, die zerkleinerten Materialien mit dem Lösungsmittel zu besprühen oder in das Lösungsmittel zu tauchen. Dies ist eine vom Verfahrensablauf her jeweils sehr einfache Methode, das Lösungsmittel mit dem Haftvermittler in Kontakt zu bringen. Gleichzeitig wird hierdurch auch auf einfache Art und Weise der bereits gelöste Haftvermittler separiert, so daß der Lösungsprozeß beschleunigt wird.

Vorzugsweise wird das zu trennende Material zerkleinert, wobei die Stückgröße des zerkleinerten Materials bis 10 cm² beträgt. Hierdurch wird eine große Oberfläche an den Rändern geschaffen, auf der das Lösungsmittel den Haftvermittler schneller erreichen kann. Das Lösungsmittel kann dann von mehreren Seiten rasch in den Haftvermittler eindringen und diesen lösen. Die Eindringtiefe kann hierbei relativ klein sein, und es kann doch eine rasche und vollständige Ablösung erfolgen.

Wählt man dagegen höhere Stückgrößen, kann u. U. die spätere Trennung der Komponenten erleichtert werden. So können beispielsweise übliche Arzneimittelblister auch ohne Zerkleinerung verarbeitet werden.

Die durch Auflösung des Haftvermittlers voneinander getrennten Materialien können nun nach Materialgruppen getrennt werden. So ist es sinnvoll, beispielsweise einen Aluminiumanteil von einem Kunststoffanteil zu trennen, aber auch weiter innerhalb des Kunststoffanteils noch einmal zu trennen nach einem PVC-Anteil und "Nicht-PVC-Anteil". Hierdurch wird die weitere Recyclierung erheblich vereinfacht. Dabei kann man beispielsweise im Schwimm-Sinkverfahren erreichen, daß Kunststoffanteile aufschwimmen und Aluminiumanteile absinken. Die aufschwimmenden Kunststoffanteile können dann abgeschöpft oder abgesiebt werden.

Ergänzend wird dann noch vorgeschlagen, daß vor der archimedischen Trennung die voneinander getrennten Materialien aus dem Lösungsmittel entnommen werden. Durch diese genannte archimedische Trennung ist einerseits natürlich sehr leicht die Trennung von Kunststoffen und Metall möglich. Andererseits läßt sich der Kunststoffanteil aber ebenfalls nach diesem Prinzip voneinander trennen. Hierbei ist allerdings von Bedeutung nur eine Trennung der Kunststoffe in PVC und Nicht-PVC-Anteile. Eine solche Trennung ist aufgrund der deutlich unterschiedlichen spezifischen Gewichte der genannten Kunststoffgruppen problemlos möglich.

Weitere Möglichkeiten der Materialtrennung sind beispielsweise die Hydrozyklontechnik oder Windsichten.

Es ist natürlich vorteilhaft, die zerkleinerten Materialien und das Lösungsmittel relativ zueinander zu bewegen. Dies kann beispielsweise durch einfaches Umrühren, aber auch durch ein Umpumpen des Lösungsmittels erfolgen. Hierdurch wird einerseits das Abspülen bereits belöster Anteile des Haftvermittlers beschleunigt und es werden durch die mechanische Beanspruchung Scherkräfte ausgeübt, die den Ablöseprozeß ebenfalls unterstützen.

Ergänzend wird noch vorgeschlagen, daß die voneinander getrennten Materialien vom Lösungsmittel gereinigt werden. Dies kann beispielsweise durch Trocknen erfolgen. Die voneinander getrennten Materialien liegen dann weitgehend rückstandsfrei für eine Weiterbehandlung vor.

Die voneinander getrennten Materialien können ihrerseits auch auf ihren jeweiligen Außenseiten noch weitere Beschichtungen, Auflagen oder Lackierungen aufweisen. Die voneinander getrennten Elemente der Materialien können somit einer weiteren Behandlung zur Enffernung solcher Schichten leicht unterzogen werden.

Wichtigstes Merkmal der Aceton-Wasser-Mischung ist, daß es nur den Haftvermittler herauslöst und Kunststoff sowie Aluminium weitgehend unverändert läßt.

Je nach gewünschter Qualität der wiedergewonnenen Produkte ist es möglich, daß weitere chemische Bestandteile wie Druckfarben, Lacke und Haftvermittler insbesondere vom Kunststoff abgelöst werden und im Lösungsmittel verbleiben, um möglichst reine Stoffe zu erhalten und so eine hohe Wertschöpfung zu erzielen. Das Lösungsmittel muß dann entweder im Prozeß selbst oder aber nach einer bestimmten Anzahl von Verfahrensschritten durch Destillation wieder von den gelösten Stoffeen gereinigt werden. Der verbleibende geringe Destillationsrückstand ist dabei der einzige im Verfahren anfallende Reststoff, der entsorgt werden muß.

Als geeignetes Lösungsmittelgemisch hat sich eine Aceton-Wasser-Mischung, enthaltend 1 - 20 Gew% Wasser, erwiesen. Die Lösungsmittelgemische haben den Vorteil, daß sich die Ablöseeigenschaften gezielt und variabel je nach Mischungsverhältnis einstellen lassen. Acetonhaltige Lösungsmittelgemische zeichnen sich ferner durch relative niedrige Toxizität sowie ein gutes Trocknungsverhalten (hoher Dampfdruck des Aceton) des mit Aceton gequollenen PVC aus.

Mit dem erfindungsgemäßen Verfahren gelingt es, in sehr einfacher Weise, insbesondere flexible und über einen Haftvermittler miteinander verbundene Materialien durch Auflösung des Haftvermittlers voneinander zu trennen und damit einer Wiederverwertung zugänglich zu machen. Hierdurch werden Rohstoffe eingespart sowie Verbrennungsanlagen und Deponien entlastet.

### Beispiel 1

5 Gramm Arzneimittelblister werden mit 40 g eines Lösungsmittelgemisches aus 90 % Aceton und 10 % Wasser in einem 250 ml Becherglas überschichtet und stehengelassen. Nach 80 min hat sich das PVC vollständig vom Aluminium getrennt und das Lösungsmittelgemisch wird dann dekantiert. Aluminium und PVC werden im Umlufttrockenschrank bei 50 °C getrocknet und anschließend durch Windsichten voneinander sortenrein getrennt.

## Patentansprüche

1. Verfahren zum Behandeln von mindestens zwei miteinander mittels Haftvermittler verbundenen Materialien, dadurch gekennzeichnet, daß der Haftvermittler mittels einer die Materialien selbst nicht lösenden Aceton-Wasser-Mischung, enthaltend 1 - 20 % Wasser, gelöst wird und hierdurch die miteinander verbundenen Materialien voneinander getrennt werden.

2. Verfahren nach Anspruch 1, dadurch gekennzeichnet, daß die Materialien zerkleinert werden, bevor sie dem Lösungsmittel ausgesetzt werden.

3. Verfahren nach Anspruch 1 und 2, dadurch gekennzeichnet, daß die zerkleinerten Materialien mit dem Lösungsmittel besprüht oder in das Lösungsmittel getaucht werden.

4. Verfahren nach einem der Ansprüche 1 - 3, dadurch gekennzeichnet, daß durch Auflösung des Haftvermittlers voneinander getrennte Materialien nach Materialgruppen getrennt werden.

5. Verfahren nach Anspruch 4, dadurch gekennzeichnet, daß die Trennung archimedisch erfolgt.

6. Verfahren nach Anspruch 5, dadurch gekennzeichnet, daß vor der archimedischen Trennung die voneinander getrennten Materialien aus dem Lösungsmittel entnommen und in die Flüssigkeit geeigneter Dichte eingesetzt werden.

7. Verfahren nach einem der Ansprüche 1 - 6, dadurch gekennzeichnet, daß die voneinander getrennten Materialien vom Lösüngsmittel gereinigt werden.

8. Verfahren nach einem der Ansprüche 1 - 7, dadurch gekennzeichnet, daß in weiteren Behandlungen die Materialien von Beschichtungen oder Auflagen getrennt werden.

## Claims

1. Process for treating at least two materials secured together by an adhesive agent, characterized in, that the adhesive agent is dissolved by an acetone-water mixture containing 1-20% of water which does not dissolve the materials themselves so that the secured materials are separated.

2. Process according to claim 1, characterized in, that the materials are comminuted before being exposed to the solvent.

3. Process according to claims 1 and 2, characterized in, that the comminuted materials are drizzled with the solvent or dipped in the solvent.

4. Process according to one of claims 1-3, characterized in, that by dissolution of the adhesive agent separated materials are separated in material groups.

5. Process according to claim 4, characterized in, that the separation is effected by flotation.

6. Process according to claim 5, characterized in, that before the separation by flotation the materials separated from one another are taken out of the solvent and are placed in a liquid with proper density.

7. Process according to one of claims 1-6, characterized in, that the solvent is removed from the separated materials.

8. Process according to one of claims 1-7, characterized in, that in further treatments the materials are separated from coatings and deposits.

## Revendications

1. Procédé pour le traitement d'au moins deux matériaux assemblés l'un à l'autre au moyen d'un agent d'adhérence, caractérisé en ce que l'agent d'adhérence est dissous au moyen d'un mélange eau-acétone ne dissolvant pas lui-même les matériaux et contenant de 1 à 20% d'eau et en ce que les matériaux assemblés l'un à l'autre sont séparés l'un de l'autre de ce fait.

2. Procédé selon la revendication 1, caractérisé en ce que les matériaux sont fragmentés avant d'être exposés au solvant.

3. Procédé selon les revendications 1 et 2, caractérisé en ce que les matériaux fragmentés sont arrosés par le solvant ou sont immergés dans le solvant.

4. Procédé selon l'une des revendications 1 à 3, caractérisé en ce que les matériaux séparés l'un de l'autre par dissolution de l'agent d'adhérence sont séparés selon les groupes de matériaux.

5. Procédé selon la revendication 4, caractérisé en ce que la séparation s'effectue par flottation.

6. Procédé selon la revendication 5, caractérisé en ce que, avant la séparation par flottation, les matériaux séparés l'un de l'autre sont enlevés du solvant et sont placés dans un liquide de densité appropriée.

7. Procédé selon l'une des revendications 1 à 6, caractérisé en ce que les matériaux séparés l'un de l'autre sont débarrassés du solvant.

8. Procédé selon l'une des revendications 1 à 7, caractérisé en ce que, pour des traitements ultérieurs, les matériaux sont séparés des enduits ou des revêtements.
